# EUROPÄISCHE PATENTANMELDUNG

(11) **EP 4 266 550 A1**
(43) Veröffentlichungstag der Anmeldung: **25.10.2023**
(21) Anmeldenummer: 22169401.1
(22) Anmeldetag: 22.04.2022
(51) Int. Cl.: H02K 7/18, F03G 7/08, H02K 7/116

(54) **RADGENERATOR MIT KOPPLUNGSSYSTEM**

(71) Anmelder: KES-Tech-Group GmbH, 39171 Bahrendorf (DE)
(72) Erfinder: von Schuttenbach, Andreas, 85051 Ingolstadt (DE); Kraus, Maik, 39104 Magdeburg (DE)

(57) **Zusammenfassung**

Die vorliegende Erfindung betrifft einen Radgenerator, nämlich einen Wandler zur Gewinnung von elektrischer Energie in einem rollenden Rad eines Fahrzeugs aus der Verformung des Radreifens durch Kontakt mit der Fahrbahn, ein System zur Gewinnung von elektrischer Energie umfassend den Wandler, sowie ein Fahrzeug oder Rad umfassend das System.

## Beschreibung

Die vorliegende Erfindung betrifft einen Radgenerator, nämlich einen Wandler zur Gewinnung von elektrischer Energie in einem rollenden Rad eines Fahrzeugs aus der Verformung des Radreifens durch Kontakt mit der Fahrbahn. Speziell betrifft die vorliegende Erfindung einen Wandler mit den Merkmalen des Oberbegriffs von Anspruch 1. Die vorliegende Erfindung betrifft ebenfalls ein System zur Gewinnung von elektrischer Energie, sowie ein Fahrzeug oder Rad umfassend das System.

### Stand der Technik

Fahrzeugreifen, insbesondere Luftreifen, werden beim Abrollvorgang unter Belastung im Bereich der Auflagefläche verformt. Dabei wird der Reifen gewalkt und es entsteht ein Energieverlust bei der Kraftübertragung infolge von Erwärmung. Die dabei geleistete Arbeit wird Walkarbeit genannt.

Die benötigte Kraft für das Walken des Reifens ist eine Hauptkomponente des Rollwiderstandes und wirkt entgegen der Antriebskraft eines Fahrzeuges. Einerseits bewirkt eine erhöhte Walkarbeit also direkt einen erhöhten Kraftstoffverbrauch des Fahrzeuges und kann ferner auch die Lebensdauer des Reifens herabsetzen. Andererseits ist eine gewisse Verformung des Reifens und damit eine Erhöhung der Auflagefläche des Reifens auf dem Boden zwecks Erhöhung des Traktionskoeffizienten des Fahrzeuges und auch zwecks Erhöhung des Fahrkomforts durchaus erwünscht. Typischerweise wird daher der Luftdruck in einem Luftreifen als Kompromiss zwischen Walkarbeit und der Traktion des Fahrzeuges eingestellt.

Der Energieverlust durch Walkarbeit des Reifens ist neben dem Luftwiderstand eine der Hauptkomponenten des Gesamtenergieverlusts bei einem Fahrzeug. Insbesondere im Bereich der Elektroautos ist deshalb bereits seit einigen Jahren die Entwicklung von Systemen zur Rekuperation (Energierückgewinnung, insbesondere zur Versorgung der Fahrzeugbatterie) basierend auf einer Ausnutzung der Walkarbeit von Fahrzeugreifen von Interesse.

Im Stand der Technik sind verschiedene Verfahren und Systeme zur Energiegewinnung am oder im Fahrzeugreifen bekannt, hauptsächlich zur Versorgung diverser im Reifen angeordneter Reifenüberwachungssensoren mit elektrischer Energie, beispielsweise Reifendrucksensoren.

So ist aus der WO 2015/054763 A1 ein Generator in einem Reifen bekannt, bei dem unter Verwendung der geringen Verformung und Raumverringerung, die im inneren Teil des Reifens zwischen dem Rad und demselben auftritt, wenn er mit dem Boden in Kontakt steht, eine Hin- und Herbewegung erzeugt und eine Vorrichtung aktiviert wird, um den Generator zu drehen.

Weiterhin offenbart die EP 3 540 921 A1 einen Energiewandler zur Erzeugung von elektrischer Energie in einem rollenden Rad eines Fahrzeugs unter Ausnutzung der elastischen Verformung des Rades zwischen Fahrebene und Mittelachse des Rades. Der Energiewandler weist dabei ein Hebelelement mit einem um eine Drehachse drehbar gelagerten Ausleger auf, wobei das Hebelelement für eine derartige Anordnung in einem Rad für ein Fahrzeug konfiguriert ist, dass eine Verformung der Lauffläche hin zur Mittelachse des Rades eine auf eine Kontaktfläche des Auslegers wirkende Kraft erzeugt, und die auf die Kontaktfläche wirkende Kraft eine Drehbewegung des Auslegers in eine Pump-Drehrichtung um die Drehachse bewirkt.

Bei den im Stand der Technik bekannten Wandlern kommt es jedoch zwischen den Hebeln beziehungsweise Auslegern, die fest mit der Felge verbunden sind, zu einem direkten Kontakt mit dem Radreifen. Es hat sich gezeigt, dass bei höheren Geschwindigkeiten, unter Umständen bei einem typischen Autoreifen bereits ab ca. 50 km/h, es durch den direkten Kontakt der Hebel mit dem Radreifen zu einer deutlichen Erwärmung des Reifenmaterials an der Kontaktstelle, dessen Erweichung und Erhöhung der Klebrigkeit, zur Beschädigung des Reifens und dadurch schließlich zum Ausfall des Generators kommt.

Die US2004/0130157 A1 offenbart ein Radfahrzeug, das in seinen Reifen mechanische und vorzugsweise hydraulische Pumpen aufweist. Das Gewicht des Fahrzeugs pumpt beim Rollen der Reifen einen Vorratsbehälter auf. Der Druck im Vorratsbehälter wird verwendet, um das Fahrzeug direkt oder indirekt anzutreiben. Die Pumpen werden über Bügel angetrieben, die Rollen tragen. Diese treten mit eigens hierfür vorgesehenen Wülsten an der Reifeninnenseite in Kontakt.

Bei sämtlichen im Stand der Technik bekannten Wandlern sind weiterhin die Hebelelemente in einem Winkel deutlich unter 45° zur Oberfläche der Reifeninnenseite angeordnet. Dies reduziert einerseits die Kräfte, die durch den direkten Kontakt der Hebel mit der Oberfläche der Reifeninnenseite an der Kontaktstelle auftreten. Andererseits wird dadurch jedoch die effektive Auslenkung der Hebelelemente, d.h. der Winkelbereich, den sie bei ihrer Bewegung überstreichen, reduziert.

Schließlich sind zahlreiche im Stand der Technik vorgeschlagene Wandler bezüglich ihrer Raumerfüllung im Inneren des Reifens sehr anspruchsvoll, was einen Wechsel des Reifens auf der Felge deutlich erschwert. So muss unter Umständen das Rad, insbesondere die Felge, zerlegt und der Wandler ausgebaut werden, bevor der Reifen gewechselt werden kann. Eine möglichst kompakte Bauweise des Wandlers, insbesondere um einen Reifenwechsel auf der Felge ohne des Ausbaus des Wandlers zu ermöglichen, wäre somit wünschenswert. Jedoch ist gleichzeitig eine dauerhaft zuverlässige Übertragung der nicht unwesentlichen Kräfte, die auf die Hebelelemente wirken, und auf die Generatoren übertragen werden muss, zu gewährleisten.

### Offenbarung der Erfindung

Es ist Aufgabe der vorliegenden Erfindung, einen Wandler zur Gewinnung von elektrischer Energie in einem rollenden Rad eines Fahrzeugs aus der Verformung des Radreifens durch Kontakt mit der Fahrbahn zur Verfügung zu stellen, der die Probleme des Standes der Technik nicht aufweist, insbesondere einen zuverlässigen Betrieb auch bei höheren Geschwindigkeiten bei hohem Wirkungsgrad gewährleistet und dabei möglichst kompakt ist, um einen Reifenwechsel auf der Felge ohne des Ausbaus des Wandlers zu ermöglichen.

Diese Aufgabe wird gemäß der vorliegenden Erfindung gelöst mit einem Wandler zur Gewinnung von elektrischer Energie in einem rollenden Rad eines Fahrzeugs aus der Verformung des Radreifens durch Kontakt mit der Fahrbahn, umfassend mindestens vier Hebelelemente, die an ihrem ersten Ende drehbar gelagert sind, und an ihrem zweiten Ende konfiguriert sind, mit der Innenseite eines Radreifens über mindestens ein Kontaktelement derart in Kontakt zu treten, dass eine Verformung des Radreifens durch Kontakt mit der Fahrbahn eine Drehbewegung der Hebelelemente bewirkt, ein mechanisches Kopplungselementsystem, das geeignet ist, die durch die Drehbewegung der Hebelelemente auftretende Kraft zu übertragen, und mindestens einen elektrischen Generator, der konfiguriert ist, die, vorzugsweise durch das mechanische Kopplungselementsystem übertragene, Kraft in elektrische Energie umzuwandeln, wobei die Hebelelemente jeweils an ihrem ersten Ende mittels einer Welle drehbar gelagert sind, und die Welle konfiguriert ist, die Kraft der Drehbewegung zu übertragen, das mechanische Kopplungselementsystem pro Welle jedes Hebelelementes mindestens zwei Kopplungselemente aufweist, die jeweils angeordnet sind, die Kraft der Drehbewegung auf die Welle des benachbart liegenden Hebelelements oder auf eine Zwischenwelle zu übertragen, und mindestes ein Planetengetriebe vorhanden ist, das angeordnet ist, die Drehbewegung einer Welle oder einer Zwischenwelle auf einen elektrischen Generator zu übertragen.

Die Erfindung beruht auf der Erkenntnis, dass es bei den bekannten Wandlern zu einen bei deren Hebeln beziehungsweise Auslegern, die fest mit der Felge verbunden sind, durch deren direkten Kontakt mit dem Inneren des Radreifens zu Reibung und folglich starker lokaler Wärmeentwicklung kommt. Bei seiner Walkbewegung vollführt der Radreifen eine bezüglich der Felge nichtlineare Bewegung, das heißt, ausgehend von der Felge als Bezugssystem ist die Bewegung eines definierten Teils der Radreifens, der mit der Fahrbahn in Kontakt kommt, bei einem Radumlauf nicht auf einer Geraden, sondern umbeschreibt eine Fläche. Bei lediglich drehbar gelagerten Hebeln beziehungsweise Auslegern kommt es somit bei einem Radumlauf zu einer Relativbewegung der entsprechenden Kontaktfläche des Radreifens und des in Kontakt tretenden Hebels beziehungsweise Auslegers, und somit zu Reibung zwischen diesen. Letztere scheint zum Ausfall der bekannten Generatoren, insbesondere bei höheren Geschwindigkeiten, bei einem typischen Autoreifen bereits ab ca. 50 km/h, zu führen. Weiterhin sind die Hebelelemente in einem Winkel deutlich unter 45° zur Oberfläche der Reifeninnenseite angeordnet. Dies reduziert einerseits die Kräfte und damit die Reibung, die durch den direkten Kontakt der Hebel mit dem Radreifen an der Kontaktstelle auftreten. Andererseits wird dadurch jedoch die effektive Auslenkung der Hebelelemente, d.h. der Winkelbereich, den sie bei ihrer Bewegung überstreichen, reduziert.

Zum zweiten sind bekannte Systeme bezüglich ihrer Raumerfüllung im Inneren des Reifens sehr anspruchsvoll, was einen Wechsel des Reifens auf der Felge deutlich erschwert. So muss unter Umständen das Rad, insbesondere die Felge, zerlegt und der Wandler ausgebaut werden, bevor der Reifen gewechselt werden kann.

Erfindungsgemäß wurde nun überraschenderweise gefunden, dass diese Probleme mittels einer Kombination von Maßnahmen gelöst werden kann, nämlich dass einerseits mindestens ein Kontaktelement, typischerweise eine Rolle oder ein Teil einer Rolle (Rollensegment), an dem zweiten Ende des Hebelelementes derart drehbar gelagert ist, dass das Kontaktelement den Kontakt des Hebelelements mit dem Radreifen vermittelt, und die Rotationsachse des Kontaktelements im Wesentlichen parallel zur Rotationsachse des Rades verläuft. Das Kontaktelement ist an dem zweiten Ende des Hebelelementes um eine Rotationsachse drehbar gelagert und vermittelt den Kontakt des Hebelelementes mit dem Radreifen. Durch seine drehbare Lagerung ist es in der Lage, die Relativbewegung zwischen Radreifen und Hebelelement, über die eigene Rollbewegung, zu kompensieren und damit Reibung zwischen Radreifen und Hebelelement zu minimieren bzw. zu vermeiden.

Andererseits wurde gefunden, dass mittels einer bestimmten Anordnung eines mechanischen Kopplungselementsystems, das pro Welle jedes Hebelelementes mindestens zwei Kopplungselemente aufweist, die jeweils angeordnet sind, die Kraft (Energie) der Drehbewegung auf die Welle des benachbart liegenden Hebelelements oder auf eine Zwischenwelle zu übertragen, eine äußerst kompakte Bauweise ermöglicht wird, die aber auch für große Kräfte eine zuverlässige Übertragung erlaubt. Wenn zusätzlich mindestes ein Planetengetriebe vorhanden ist, das angeordnet ist, die Drehbewegung einer Welle auf einen elektrischen Generator zu übertragen, kann der Kraftschluss vom mechanischen Kopplungselementsystem zum Generator bei minimalem Raumbedarf unter Verwirklichung einer geeigneten Übersetzung ermöglicht werden.

Die Erfindung wird nun in weiteren Einzelheiten anhand von bevorzugten Ausführungsformen beschrieben.

Der erfindungsgemäße Wandler zur Gewinnung von elektrischer Energie in einem rollenden Rad eines Fahrzeugs aus der Verformung des Radreifens durch Kontakt mit der Fahrbahn, umfasst mindestens vier Hebelelemente, die an ihrem ersten Ende drehbar gelagert sind, und an ihrem zweiten Ende derart konfiguriert ist, mit der Innenseite des Radreifens über mindestens ein Kontaktelement derart in Kontakt zu treten, dass eine Verformung des Radreifens durch Kontakt mit der Fahrbahn eine Drehbewegung der Hebelelemente bewirkt. Das Rad umfasst typischerweise eine Felge und einen mit Druckluft befüllbaren Radreifen.

Unter der Drehbewegung des Hebelelements ist typischerweise eine Teildrehung (Schwenkbewegung) des Hebelelements um die Drehachse N am ersten Ende zu verstehen. Das Hebelelement ist also insbesondere speziell darauf ausgelegt, im Rahmen des Abrollvorgangs des belasteten auf einer im Wesentlichen ebenen Fahrebene rollenden Rads entstehende Verformungen des Radreifens im Bereich der Auflagefläche mittels der Kontaktelementes zu erfassen und in eine Drehbewegung um die Drehachse N am ersten Ende des Hebelelements zu übertragen. Das Hebelelement hat somit selbst keinen Kontakt zur Reifeninnenseite, sondern steht lediglich über das mindestens eine Kontaktelement mit dieser in Kontakt. Gemäß einer Ausführungsform des Wandlers ist dieser bzw. das Hebelelement also derart konfiguriert, dass die Kontaktfläche des Kontaktelementes des Hebelelements ausgelegt ist zur Herstellung eines Kontakts mit einer Reifeninnenfläche des Rades.

Jedes Hebelelement ist an seinem ersten Ende drehbar gelagert, vorzugsweise an der Trägerstruktur bzw. der Felge des Rades. Grundsätzlich kann die Drehachse N am ersten Ende des Hebelelements jedwede Richtung aufweisen, die im Wesentlichen parallel zu dessen entsprechender Kontaktfläche an der Innenseite des Radreifens verläuft, da somit die Walkbewegung der Innenseite des Radreifens, also ein Bewegung auf die Felge zu, zu einer Teildrehung des Hebelelementes führen kann. In einer bevorzugten Ausführungsform verläuft die Drehachse des Hebelelements im Wesentlichen parallel zur Rotationsachse des Rades.

Im Wesentlichen parallel bedeutet im Rahmen der vorliegenden Erfindung vorzugsweise eine Abweichung von der Parallelen von unter 10°, mehr bevorzugt unter 5°.

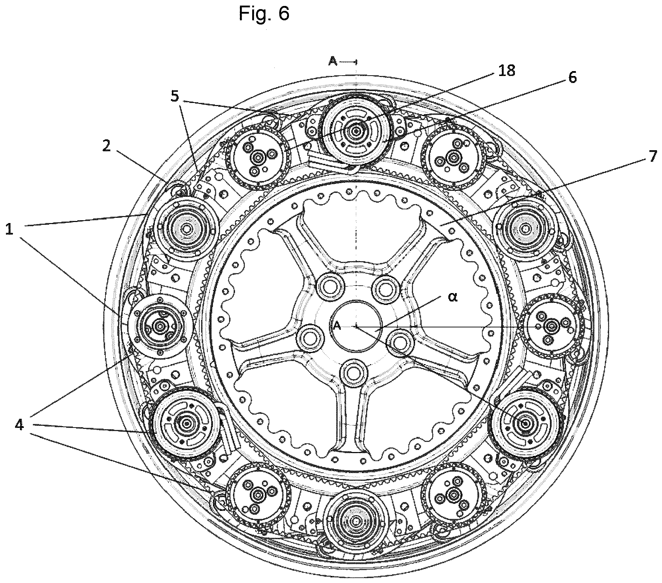

In einer bevorzugten Ausführungsform ist das Hebelelement einstückig. In dieser trägt es vorzugsweise ein, insbesondere nur ein, Kontaktelement, das an diesem drehbar gelagert ist. In einer alternativen ebenfalls bevorzugten Ausführungsform ist das Hebelelement mindestens zweigeteilt, das heißt besteht aus mindestens zwei, vorzugsweise nur zwei, Teilen, die mechanisch verbunden sind, vorzugsweise teilweise gegeneinander drehbar. Beispielsweise bildet der erste Teil des Hebelelementes das erste Ende, an dem das Hebelelement drehbar gelagert ist, der zweite Teil stellt das zweite Ende dar, welches das Kontaktelement/die Kontaktelemente trägt. Die Teildrehbarkeit des ersten Teils gegenüber dem zweien Teil erlaubt den Ausgleich der Drehbewegung (Wippbewegung) des Hebelelementes beim Kontakt der Kontaktelemente mit der Reifeninnenseite des gewalkten Reifens unter gleichzeitige Beibehaltung des Kontaktes der Kontaktelemente mit der Reifeninnenseite. In dieser alternativen Ausführungsform trägt das Hebelelement, vorzugsweise jedes Hebelelement, vorzugsweise mindestens zwei, insbesondere nur zwei, Kontaktelemente, die am Hebelelement, insbesondere dem zweiten Teil, drehbar gelagert sind. Besonders bevorzugt besteht in der alternativen Ausführungsform das Hebelelement somit aus einem ersten Teil mit dem ersten Ende, und dem zweiten Teil, das ein Halteelement für mindestens zwei, vorzugsweise zwei Kontaktelementen darstellt, und somit vorzugsweise einen Rollenschlitten darstellt. Letzterer ist so konfiguriert, dass beide Kontaktelemente gleichzeitig mit der Innenseite des Radreifens (Oberfläche der Reifeninnenseite) in Kontakt treten können. Auf diese Weise kann die Kontaktfläche auf der Innenseite des Radreifens erhöht, und damit die Punktkraft und somit die Punktbelastung des Radreifens verringert werden. Der zweite Teil (im Folgenden auch als "Schlitten" bezeichnet) ist derart teildrehbar am Hebelelement gelagert, dass beim "Ausklappen" des Hebelelementes, z.B. aus der Ruhestellung, ein Kontakt aller Kontaktelemente, die der Schlitten trägt, mit dem Radreifen ermöglicht wird. In einer bevorzugten Ausführungsform ist der Abstand der Drehachsen der Kontaktelemente, die der (jeder) Schlitten trägt, in etwa gleich (±10%, bevorzugt ±5%) des Abstandes der Drehachsen zweier benachbarter Kontaktelemente zweiter (unmittelbar) benachbarter Hebelelemente, wenn die Kontaktelemente an der Innenseite des Radreifens anliegen. Beispielsweise ist vorzugsweise der Abstand der Drehachsen zweiter Kontaktelemente, die jeder der Schlitten der vorzugsweise 8 oder 12 Hebelelemente, in etwa gleich (±10%, bevorzugt ±5%) des Abstandes der Drehachsen eines Kontaktelementes eines ersten Schlittens zur Drehachse des nächstliegenden Kontaktelementes des (unmittelbar) benachbarten Schlittens. Anders ausgedrückt ist vorzugsweise der Winkel β, den die beiden Drehachsen der Kontaktelemente eines Schlittens bezogen auf die Drehachse des Rades aufspannen, in etwa 360°/2^{∗}n, wobei n die Anzahl der Hebelelemente bzw. Schlitten ist. Der Winkel β, den die beiden Drehachsen der Kontaktelemente eines Schlittens bezogen auf die Drehachse des Rades vorzugsweise aufspannen, ist also in etwa (±10%, bevorzugt ±5%) die Hälfte des Winkels α zwischen zwei Hebelelementen. Der Winkel α ist der Winkel, den die Drehachsen zweier benachbarte Hebelelemente (wie in der Figur 6 gezeigt), das heißt, bei gleicher Stellung der Hebelelemente, auch die Drehachsen der Schlitten, bezogen auf die Drehachse des Rades aufspannen. Der Winkel α entspricht somit 360°/n, wobei n die Anzahl der Hebelelemente ist. In dieser Ausführungsform ist die Kraftverteilung gleichmäßig über den Radreifen (Oberfläche der Reifeninnenseite) verteilt, da die Kontaktelement in etwa in gleichem Abstand den Radreifen kontaktieren. Bei 12 Hebelelementen und je zwei Rollen pro Schlitten stehen somit 24 etwa gleich (±10%, bevorzugt ±5%) beabstandete Kontaktelemente mit der Reifeninnenseite in Kontakt (der Winkel β ist zwischen jeweils benachbarten Kontaktelementen, sowohl zweier Kontaktelement eines Schlittens als auch die jeweils benachbarten Kontaktelemente zweier benachbarter Schlitten, ist dann in etwa 15° (±10%, bevorzugt ±5%)). Über die Reifeninnenseite in etwa gleich und damit gleichmäßig beabstandete Kontaktelemente führen auch zu einer gleichmäßigeren Energieübertragung auf die Hebelelemente, da hierdurch bei typischen Walkverformungen, etwa von PKW oder LKW-Reifen, gleichzeitig immer mindestens zwei Hebelelemente über ihre Schlitten eine Auslenkung erfahren.

In einer Ausführungsform werden die, vorzugsweise zwei, Kontaktelemente eines Schlittens, vorzugsweise wenn sie als Rollen ausgeführt sind, von einem Riemen oder Band umspannt bzw. umlaufen. Der Riemen oder das Band läuft beispielsweise direkt um beide Rollen, oder zusätzlich um eine Umlenkrolle, die ebenfalls am Schlitten angeordnet sein kann. Die umspannten Kontaktelemente, vorzugsweise Rollen, treten dabei über den Riemen bzw. das Band mit der Reifeninnenseite in Kontakt. Dies vergrößert die effektive Kontaktfläche der Kontaktelemente mit der Reifeninnenseite und verringert damit die Punktlast und somit die Belastung des Reifens. Der Riemen kann beispielsweise als Keilriemen oder Keilrippenriemen ausgeführt sein, um ein Ablaufen von den Rollen zu vermeiden.

In einer bevorzugten Ausführungsform weist der Wandler mindestens sechs Hebelelemente insbesondere mindestens 6 bis 16, am meisten bevorzugt 8 bis 12, auf.

In einer bevorzugten Ausführungsform weist der Wandler die Hebelelemente rotationssymmetrisch um die Rotationsachse des Rades angeordnete auf, insbesondere mindestens 6 bis 16, am meisten bevorzugt 8 bis 12.

Das Hebelelement des erfindungsgemäßen Wandlers umfasst mindestens ein Kontaktelement. Über Letzteres tritt das Hebelelement mit der Innenseite des Reifens in Kontakt, so dass eine Verformung des Radreifens durch Kontakt mit der Fahrbahn eine (Teil-)Drehbewegung des Hebelelements bewirkt. Das heißt, das (jedes) Hebelelement weist an dem zweiten Ende mindestens ein Kontaktelement derart in bzw. an dem Hebelelement drehbar gelagert auf, dass das Kontaktelement den Kontakt des Hebelelements mit dem Radreifen vermittelt.

Vorzugsweise tritt das (jedes) Hebelelement in keiner Stellung der Rotation um seine Drehachse N an dessen ersten Ende (unter Normalbetrieb) direkt mit der Innenseite das Radreifens in Kontakt, das heißt berührt diesen nicht. Vielmehr tritt lediglich das Kontaktelement/die Kontaktelemente mit der Innenseite das Radreifens in Kontakt, das heißt berührt diesen, sofern das Hebelelement sich entsprechend um die Drehachse am ersten Ende Richtung Reifenoberfläche gedreht hat (von der Felge weg). Die Rotationsachse des Kontaktelements/der Kontaktelemente ist im Wesentlichen parallel zur Rotationsachse des Rades. Bei Anwesenheit von mehr als einem Kontaktelement an einem Hebelelement sind deren Rotationsachsen parallel angeordnet. Die Möglichkeit, dass das Kontaktelement einerseits drehbar am Hebelelement gelagert ist und andererseits sich um eine Achse, die im Wesentlichen parallel zur Rotationsachse des Rades liegt, drehen kann, ermöglicht es, dass die Relativbewegung zwischen Radreifen und Hebelelement kompensiert wird und damit Reibung zwischen Radreifen und Hebelelement minimiert wird. Vorzugsweise ist das Kontaktelement bezüglich dessen Abmessungen, zumindest in dem Bereich, der mit der Innenseite des Radreifens in Kontakt tritt, im Wesentlichen bezüglich seiner Rotationsachse rotationssymmetrisch. Insbesondere handelt es sich somit um eine Rolle bzw. Teilrolle (Rollensegment). Die Rolle hat im Wesentlichen ein Zylinderform (die Rotationsachse des Kontaktelementes entspricht dann der Zylinderachse), gegebenenfalls mit kreisförmig nach außen gewölbter Zylindermantelfläche (tonnenförmige Rolle). Typische geeignete Radien des Kontaktelementes, also vorzugsweise Rollenradien, sind solche, bei denen das Verhältnis Radius des Kontaktelementes zu Radius der Innenseite des Radreifens R (um die Radmitte) im Bereich von 0,04 bis 0,08, vorzugsweise 0,05 bis 0,07 liegt. Typische geeignete Rollenradien, insbesondere für einen PKW-Reifen, liegen damit im Bereich von 18 mm bis 30 mm. Vorzugsweise ist das Kontaktelement bezüglich seiner Rotationsachse frei drehbar, insbesondere frei um 360° drehbar. Das heißt, das Kontaktelement kann sich vorzugsweise frei um die Drehachse, um die es drehbar am/im Hebelelement, bzw. im Schlitten, gelagert und befestigt ist, drehen, insbesondere vollständig um die eigene Achse. Dies stellt während des Betriebes auch bei höheren Geschwindigkeiten einen gleichmäßigen Kontakt des Kontaktelementes mit der Innenseite des Radreifens sicher.

Gemäß einer bevorzugten Ausführungsform ist das Verhältnis des Abstands A der Drehachse des Hebelelementes N von der Radmitte M zum Radus der Innenseite des Radreifens R (A/R) im Bereich von 0,55 bis 0,60, vorzugsweise 0,56 bis 0,59.

Gemäß einer bevorzugten Ausführungsform ist das Verhältnis des Abstand B der Drehachse des Hebelelementes N von der Kontaktstelle K des Kontaktelementes mit der Innenseite des Radreifens (im Falle von mehreren Kontaktelementen pro Hebelelement das mit dem größten Abstand von der Drehachse N) zum Radus der Innenseite des Radreifens R (B/R) im Bereich von 0,44 bis 0,55, vorzugsweise 0,45 bis 0,53, insbesondere 0,46 bis 0,50.

Im erfindungsgemäße Wandler kann das Hebelelement, das an seinem ersten Ende drehbar gelagert ist, mit der Innenseite des Radreifens über das mindestens eine Kontaktelement in Kontakt treten. Das bedeutet, die Summe des Abstands A der Drehachse des Hebelelementes N von der Radmitte M und des Abstand B der Drehachse N von der Kontaktstelle K des Kontaktelementes mit der Innenseite des Radreifens (im Falle von mehreren Kontaktelementen pro Hebelelement ist die Kontaktstelle die mit dem größten Abstand von der Drehachse N) (A+B) beträgt mehr als der Radus der Innenseite des Radreifens R ((A+B)/R)>1).

Bevorzugt wird die Auslenkung der Hebelelemente, d.h. der Winkelbereich, den sie bei ihrer Bewegung überstreichen, deutlich erhöht, indem die Summe (A+B) des Abstands A der Drehachse N des Hebelelementes von der Radmitte M und des Abstand B der Drehachse N von der Kontaktstelle K des Kontaktelementes mit der Innenseite des Radreifens, im Falle von mehreren Kontaktelementen pro Hebelelement die Kontaktstelle mit dem größten Abstand von der Drehachse N, im Verhältnis zum Radus der Innenseite des Radreifens R ((A+B)/R)) im Bereich von 102% bis 110% liegt, insbesondere 103% bis 107%. Dieser Wertebereich für (A+B)/R bedeutet eine deutlich "gestrecktere" Anordnung der Hebelelemente in Vergleich zum Stand der Technik, sodass diese fast senkrecht gegenüber der Reifeninnenseite angeordnet sind. Dies erhöht zwar die Kräfte und die Relativbewegung zwischen Radreifen und Hebelelement, ermöglicht aber einen hohen Wirkungsgrad, da erst durch die Erhöhung des Winkelbereichs, den die Hebelelemente bei ihrer Bewegung überstreichen, ein effektiver Antrieb der Generatoren gewährleistet werden kann.

Der Radus R bezieht sich hier immer auf den Radius des unbelasteten Reifen von Radmitte bis zur Innenseite des Radreifens (Oberfläche der Reifeninnenseite). Drehachse des Hebelelementes N bezieht sich auf die Drehachse des Hebelelementes an dessen ersten Ende.

Der erfindungsgemäße Wandler umfasst ferner ein mechanisches Kopplungselementsystem. Dieses ist konfiguriert und geeignet, die durch die Drehbewegung der Hebelelemente auftretende Kraft (Energie) zu übertragen, und zwar vorzugsweise zu dem Generator / den Generatoren. Das mechanische Kopplungselementsystem umfasst hierbei pro Welle jedes Hebelelementes mindestens zwei Kopplungselemente. Typische geeignete Kopplungselemente sind Zahnräder und Achsen, Riemen, Ketten und dergleichen. Bevorzugt umfasst das Kopplungselement mindestens eine Kette oder Riemen, insbesondere Zahnriemen und/oder Keilrippenriemen. Das mechanische Kopplungselementsystem umfasst hierbei typischerweise auch entsprechende Mittel für den Eingriff der Kopplungselemente auf den Wellen der Hebelelemente, z.B. Zahnräder, Rillenräder, und dergleichen.

Bevorzugt wird die Kraft (Energie) aller Hebelelemente des Wandlers auf das (gemeinsame) mechanische Kopplungselementsystem, beispielsweise einen Satz Ketten oder Riemen, insbesondere Zahnriemen und/oder Keilrippenriemen, übertragen. Bevorzugt umfasst das mechanische Kopplungselementsystem pro Welle jedes Hebelelementes mindestens zwei Kopplungselemente, wobei alle Wellen der Hebelelemente durch das mechanische Kopplungselementsystem mit den jeweils benachbarten Wellen der Hebelelemente oder über Zwischenwellen über jeweils ein Kopplungselement kraftschlüssig verbunden ist. Da die Hebelelemente bevorzugt rotationssymmetrisch um die Rotationsachse des Rades, also ringförmig, angeordnet sind, wird bevorzugt ein "Ringschluss" hergestellt, d.h. radumläufig sind alle Wellen der Hebelelemente durch das mechanische Kopplungselementsystem mit den jeweils benachbarten Wellen der Hebelelemente über jeweils ein Kopplungselement kraftschlüssig verbunden. Die Anzahl der Kopplungselemente des mechanischen Kopplungselementsystems entspricht daher vorzugsweise der Anzahl der Wellen der Hebelelemente. Das heißt, bevorzugt sind keine Zwischenwellen vorhanden.

Das mechanische Kopplungselementsystem ermöglicht somit den Kraftschluss aller Hebelelementen des Wandlers. Dies erlaubt ein kontinuierlicheres Antreiben des/der Generatoren. Vorzugsweise steht das mechanisches Kopplungselementsystem auch mit mehreren, am meisten bevorzugt mit allen Generatoren des Wandlers in Kraftschluss. Durch verteilen der gesamten durch die Hebelelemente gewonnen Energie auf mehrere Generatoren können diese kontinuierlich betrieben werden, was eine effiziente Energierückgewinnung bei minimalem Materialeinsatz erlaubt.

In einer bevorzugen Ausführungsform umfasst der Wandler somit ein mechanisches Kopplungselementsystem, das über Riemen, insbesondere Keil-, Zahn- oder Keilrillenriemen den Kraftschluss aller Hebelelementen, vorzugsweise 8 oder insbesondere 12, des Wandlers mit allen Generatoren, vorzugsweise drei oder vier, herstellt. Hierbei ist bevorzugt, dass jeweils ein Riemen um eine Rolle bzw. ein Zahnrad, die mit der Welle eines Hebelelements verbunden ist, und um eine Rolle bzw. ein Zahnrad, die mit der Welle eines benachbarten Hebelelements verbunden ist, geführt wird. In einer Ausführungsform kann eine oder mehrere zwischengeschalteten Freilaufrollen oder Rollen auf Zwischenwellen vorhanden sein, die über Kopplungselemente verbunden sind. Vorzugsweise sind keine zwischengeschalteten Freilaufrollen oder Rollen, die nicht mit einer Welle eines Hebelelementes und/oder lediglich mit einem Generator verbunden sind, vorhanden. In der am meisten bevorzugten Ausführungsform umfasst der Wandler somit ein mechanisches Kopplungselementsystem , dass 12 Riemen, insbesondere Keil-, Zahn- oder Keilrillenriemen umfasst, die den Kraftschluss aller Wellen der 12 Hebelelemente bewirkt.

Schließlich umfasst der erfindungsgemäße Wandler mindestens einen elektrischen Generator, der konfiguriert ist, die durch die Drehbewegung des/der Hebelelemente(s) gewonnene, vorzugsweise durch das mechanisches Kopplungselementsystem übertragene, Kraft (Energie) in elektrische Energie umzuwandeln. In einer bevorzugten Ausführungsform weist der Wandler mindestens zwei rotationssymmetrisch um die Rotationsachse des Rades angeordnete Generatoren auf, insbesondere mindestens 2 bis 12, am meisten bevorzugt 3 bis 8, beispielsweise drei oder vier. Vorzugsweise entspricht die Anzahl der Hebelelemente ein Vielfaches der Anzahl der Generatoren.

Erfindungsgemäß ist mindestes ein Planetengetriebe vorhanden ist, das angeordnet ist, die Drehbewegung einer Welle eines Hebelelementes auf einen elektrischen Generator zu übertragen. Planetengetriebe, im Stand der Technik auch als Umlaufrädergetriebe bezeichnet, sind Zahnrad- oder Reibradgetriebe, die neben gestellfesten Wellen auch Achsen besitzen, die auf Kreisbahnen im Gestell umlaufen. Dementsprechend wird zwischen den auf den gestellfesten Achsen gelagerten Zentral- oder Sonnenrädern und den auf den umlaufenden Achsen gelagerten Umlauf-, Planeten-, oder Sternrädern unterschieden. Die auf den umlaufenden Achsen drehenden Sternräder umkreisen ein zentrales Rad ähnlich wie Planeten die Sonne. Der Steg, der die umlaufenden Achsen trägt, dreht seinerseits um eine gestellfeste Achse. Geeignete Planetengetriebe und insbesondere geeignete Materialien für das erfindungsgemäß eingesetzte Planetengetriebe, z.B. Edelstahl, sind im Stand der Technik bekannt. Planetengetriebe sind kompakt bauende Getriebe mit dem besonderen Merkmal, dass die gestellfesten Achsen (bzw. Wellen bei DrehmomentÜbertragung) zueinander fluchten. Daher ist das Planetengetriebe sonders vorteilhaft für den erfindungsgemäßen Wandler.

In einer bevorzugten Ausführungsform umfasst das erfindungsgemäß eingesetzte Planetengetriebe mindestens ein Hohlrad (als Zentralrad), sowie mehrere Umlaufräder, deren Rotationsachsen parallel zur Rotationsachse des Hohlrades sind, und die mittels eines Stegs getragen werden. Die Umlaufräder laufen bevorzugt um ein (inneres) Sonnenrad, wobei letzteres die Rotationsachse des Hohlrades teilt, die parallel zu den Rotationsachsen der Umlaufräder liegt. Erfindungsgemäß wird das Planetengetriebe bevorzugt im sogenannten Zweiwellenbetrieb eingesetzt, und zwar als Standübersetzung, d.h. der Steg ist still und fixiert, und die beiden Zentralradwellen, also das Hohlrad und das Sonnenrad drehen sich. Bevorzugt sind die Umlaufräder sowie das (innere) Sonnenrad innerhalb des Hohlrads angeordnet. Letzte Anordnung ermöglicht eine äußerts kompakte Bauweise des Planetengetriebes. Typischerweise sind 2 bis 4 Umlaufräder, insbesondere drei Umlaufräder pro Hohlrad vorhanden. Die Dimensionierung ist vorzugsweise so, dass das Planetengetriebe die Drehbewegung des Hohlrades zum Sonnenrad hin ins Schnelle, vorzugsweise mit einer Übersetzung von etwa 1:4 bis 1:10, insbesondere 1:5 bis 1:8, übersetzt.

Bevorzugt ist der elektrische Generator so angeordnet und konfiguriert, dass die durch das Planetengetriebe übertragene Kraft (Energie) in elektrische Energie umgewandelt wird. Es ist weiterhin bevorzugt, dass das Planetengetriebe, bevorzugt dessen Hohlrad, an eine Welle eines Hebelelements gekoppelt ist, und insbesondere unmittelbar zwischen der Welle eines Hebelelements und dem Generator angeordnet ist. Auch ist bevorzugt, dass die Welle des Hebelelementes mit dem Hohlrad verbunden, bzw. als dieses, vorzugsweise einstückig, ausgeformt ist. Die Achsen der Umlaufräder sind typischerweise fixiert, d.h. unmittelbar oder mittelbar mit der Felge verbunden. Das Sonnenrad ist, vorzugsweise direkt, mit der Generatorantriebswelle verbunden, bzw. sogar als diese einstückig ausgeformt. Durch dieser Anordnung wird einer derartige bevorzugte Ausführung ermöglicht, dass das Planetengetriebe die Drehbewegung der Welle des Hebelelementes ins Schnelle, vorzugsweise mit einer Übersetzung von etwa 1:4 bis 1:10, insbesondere 1:5 bis 1:8, zum Generator hin übersetzt. In einer besonders bevorzugten Ausführungsform ist das Planetengetriebe im Wesentlichen in das Hohlrad auf der Welle des Hebelelementes, oder einer Zwischenwelle, integriert, d.h. bevorzugt befinden sich die Umlaufräder sowie das Sonnenrad im Wesentlichen innerhalb des Hohlrads, das bevorzugt Teil der Welle des entsprechenden Hebelelementes oder einer Zwischenwelle ist. Bevorzugt laufen über das Hohlrad die Kopplungselemente des mechanischen Kopplungselementsystems. So wird eine äußerst kompakte Bauweise des mechanischen Kopplungselementsystems sowie des Getriebes für den Generator ermöglicht. Vorzugsweise ist hierbei der Generator unmittelbar im Anschluss an, d.h. anliegend an das Planetengetriebe, insbesondere an der der Welle des Hebelelementes abgewandten Seite, angeordnet.

Typischerweise wird der Rotor des Generators über das mechanische Kopplungselementsystem und das Planetengetriebe bewegt bzw. angetrieben, der Stator des Generators ist mit dem Trägerelement/der Felge des Rades verbunden. Bevorzugt bildet, wie oben ausgeführt, der Steg des Planetengetriebes, der die Achsen der Umlaufräder trägt, den statischen Teil des Planetengetriebes. Die Achse des Sonnenrads stellt dann die Achse dar, auf der der Rotor des Generators angeordnet ist.

Vorzugsweise werden alle Generatoren des Wandlers über das mechanisches Kopplungselementsystem gekoppelt gleichzeitig angetrieben. Das heißt, bevorzugt werden alle Generatoren über entsprechende Planetengetriebe, die an Wellen entsprechender Hebelelemente angeordnet sind, angetrieben, wobei die Wellen der Hebelelemente über das mechanisches Kopplungselementsystem im Kraftschluss stehen. Bevorzugt bilden hierbei die Hohlräder der Planetengetriebe einen Teil des mechanischen Kopplungselementsystem, insbesondere laufen Kopplungselemente über die Hohlräder.

Alternativ wird der Rotor des Generators über direkte Kopplung mit Zwischenwellen, beispielsweise ein an diesen befestigtes oder gekoppeltes Anschlusselement, beispielsweise ein Anschlussrad, bewegt, der Stator des Generators ist mit dem Trägerelement/der Felge des Rades verbunden. In dieser Ausführungsform wird die Kraft der Hebelelemente durch das mechanische Kopplungselementsystem zu allen Zwischenwellen, und über diese auf die Generatoren, vorzugsweise alle Generatoren gleichzeitig, übertragen, und diese dadurch angetrieben.

Damit der elektrische Generator beispielsweise bereits durch relativ geringe Auslenkungen eines Hebelelements und damit geringe Bewegung des mechanischen Kopplungselementsystems dennoch mit geeigneten Drehzahlen angetrieben werden kann, weist der Wandler das Planetengetriebe auf. Gegebenenfalls kann ein weiteres Getriebe bzw. eine Übersetzung, vorzugsweise pro Generator, zum Erzeugen einer zusätzlichen definierten Übersetzung zwischen dem Planetengetriebe und der Drehbewegung des Rotors des Generators vorhanden sein. Zum Beispiel ist das Getriebe und/oder die Übersetzung dabei konfiguriert, zwischen dem Planetengetriebe und der Drehbewegung des Rotors eine Übersetzung hin zu höheren Drehzahlen des Rotors zu erzeugen, insbesondere eine Übersetzung von einem Verhältnis größer 1 bis 1:4, vorzugsweise 1:2 bis 1:3. Bevorzugt ist jedoch neben dem Planetengetriebe kein weiteres Getriebe für den Generator vorhanden. Um eine kontinuierliche Bewegung und damit Kraftübertragung des mechanischen Kopplungselementsystems zu gewährleisten, ist es bevorzugt, dass der bzw. die Hebelelemente die Kraft über eine Freilaufkupplung, das heißt eine drehrichtungsabhängige Kupplung, beispielsweise auf die Welle des Hebelelementes übertragen. So weist der Wandler vorzugsweise pro Hebelelement eine Freilaufkupplung auf, konfiguriert zur drehrichtungsabhängigen Kupplung, d.h. aufweisend eine Kupplungsrichtung zur Herstellung einer wirkenden Kupplung und eine Freilaufrichtung. Typischerweise ist die Freilaufkupplung so konfiguriert, dass der Kraftschluss bei Bewegung des Hebelelementes in Richtung zur Rotationsachse des Rades hin erfolgt, und entsprechend der Freilauf bei Bewegung des Hebelelementes von der Rotationsachse des Rades weg. Das Hebelelement, die Freilaufkupplung, das mechanische Kopplungselementsystem, das Planetengetriebe und der elektrische Generator sind vorzugsweise derart angeordnet und konfiguriert, dass die Drehbewegung des Hebelelement über die Freilaufkupplung in Kupplungsrichtung über das mechanische Kopplungselementsystem auf den Rotor/die Rotoren des/der elektrischen Generators/Generatoren übertragen und in elektrische Energie gewandelt wird.

Gemäß einer weiteren bevorzugten Ausführungsform weißt der erfindungsgemäße Wandler ein Vorspannmittel für das/die Hebelelement(e) auf, insbesondere eine Feder, das die Drehung des Hebelelements um ihr erstes Ende mit einer Kraft in die durch die Verformung des Radreifens durch Kontakt mit der Fahrbahn verursachte Drehbewegung der Hebelelemente, das heißt in Richtung Drehung des Hebelelementes hin zur Rotationsachse des Rades, vorspannt. Das Vorspannelement stellt sicher, dass das/die Hebelelement(e) bei Stillstand des Rades bzw. lediglich geringen Drehzahlen des Rades nicht mit dem Radreifen in Kontakt stehen, das heißt, in einem "zurückgezogenen" Zustand verbleiben. Letzteres vereinfacht die Reparatur des Rades und den Reifenwechsel auf dem Rad. Das Vorspannmittel ist dann zweckmäßig so konfiguriert, dass ab geeigneten Drehzahlen des Rades eine Bewegung des Hebelelementes von der Rotationsachse des Rades weg erlaubt wird (die Zentrifugalkraft also die Vorspannkraft übersteigt) und das Kontaktelement des Hebelelementes mit dem Radreifen in Kontakt kommen kann. Vorzugsweise ist das Vorspannmittel so konfiguriert, dass ab Drehzahlen des Rades von mindestens 100 U/min, mehr bevorzugt mindestes 120 U/min, eine Bewegung des Hebelelementes von der Rotationsachse des Rades weg erlaubt wird. Typische Drehzahlen sind etwa 125 U/min, was einer Geschwindigkeit von etwa 15 km/h (beim PKW) entspricht.

Um zu vermeiden, dass durch übermäßige Stöße und/oder übermäßige Verformungen der Lauffläche des Rades auf die Hebelelement wirkende Kräfte den Wandler bzw. dessen Bestandteile beschädigen, ist vorzugsweise ein entsprechender Schutzmechanismus vorgesehen, insbesondere ein Überlastschutz. So handelt es sich vorzugsweise bei den Freilaufkupplungen, den Kupplungen innerhalb oder zum mechanischen Kopplungselementsystem und/oder die Kupplungen zu den Generatoren um Sicherheitskupplungen mit Überlastschutz, die beim Überschreiten von definierten Maximalkräften ein Drehung ohne effektive Kupplung erlauben.

Die vorliegende Erfindung betrifft ferner ein System zur Gewinnung von elektrischer Energie in einem rollenden Rad eines Fahrzeugs aus der Verformung des Radreifens durch Kontakt mit der Fahrbahn, umfassend einen Wandler wie oben beschrieben sowie einem Trägerelement/eine Radfelge als Trägerstruktur. In einer bevorzugten Ausführungsform ragen die Hebelelemente einschließlich Kontaktelemente nicht über die Felgenhörner, das heißt über die Mantelfläche eines durch die Felgenhörner definierten Zylinders, hinaus.

In einer Ausführungsform weist das System einen wie oben beschriebenen Wandler sowie eine Trägerstruktur auf, wobei die Trägerstruktur typischerweise so konfiguriert ist, den Energiewandler in einer fixen Anordnung um die Mittelachse des Rades zu halten. Insbesondere kann die Trägerstruktur selber als Felge des Rades ausgebildet oder in diese integriert sein, oder das System weist eine - speziell für eine Kombination mit der Trägerstruktur vorgesehene - Felge auf, konfiguriert für eine fixierte Aufnahme der Trägerstruktur. Vorzugsweise ist die Felge einteilig.

Gemäß einer weiteren Ausführungsform weist das System eine mehrteilige Felge auf, was die Montage des Wandlers bzw. der Trägerstruktur im Rad vereinfachen kann. Zum Beispiel ist die mehrteilige Felge ausgebildet als eine zweiteilige Felge mit einem Felgenbett und einer Felgenhülse oder als eine dreiteilige Felge mit einem Felgenbett, einer Felgenhülse und einem Felgenstern. In dem Fall können der Wandler bzw. die Trägerstruktur und die mehrteilige Felge beispielsweise konfiguriert sein, dass der Wandler bzw. die Trägerstruktur auf ein Felgenbett der mehrteiligen Felge montiert ist.

Schließlich betrifft die vorliegende Erfindung ein Landfahrzeug, vorzugsweise ein Kraftfahrzeug oder einen Lastkraftwagen, oder ein Rad, umfassend ein System wie oben beschrieben. In einer Ausführungsform umfasst das Rad auch einen Felgenmotor.

Die Erfindung wird nun anhand der Zeichnungen beschrieben.
Figur 1 zeigt eine perspektivische Ansicht eines erfindungsgemäßen Wandlers mit Hebelelementen und dem mechanischen Kopplungselementsystem auf einer Felge.
Figur 2 zeigt eine perspektivische Ansicht eines erfindungsgemäßen Wandlers mit Hebelelementen und dem mechanischen Kopplungselementsystem auf einer Felge.
Figur 3 zeigt eine perspektivische Ansicht eines mechanischen Kopplungselementsystem einschließlich der Planetengetriebe eines erfindungsgemäßen Wandlers.
Figur 4 zeigt eine perspektivische Ansicht eines Planetengetriebes im (A) und außerhalb (C) des Zahnrads einer Welle.
Figur 5 zeigt einen perspektivischen Schnitt durch eine Welle (B) eines Hebelelementes ohne Planetengetriebe.
Figur 6 zeigt eine schematische Seitenansicht eines erfindungsgemäßen Wandlers mit Hebelelementen und dem mechanischen Kopplungselementsystem auf einer Felge.
Figur 7 zeigt einen Schnitt durch einen erfindungsgemäßen Wandler mit Hebelelementen, dem mechanischen Kopplungselementsystem, dem Planetengetriebe und dem Generator.
Figur 8 zeigt einen perspektivischen Schnitt durch eine Welle eines Hebelelementes, das mechanische Kopplungselementsystem, das Planetengetriebe und den Generator.
Figur 9 zeigt eine perspektivische Ansicht eines Hebelelements einschließlich Kontaktelement.
Figur 10 zeigt eine perspektivische Ansicht eines Hebelelements einschließlich Kontaktelement.
Figur 11 illustriert die Verhältnisse der Abstände der Drehachse des Hebelelementes N von der Radmitte M und der Kontaktstelle K.
Figur 12 illustriert drei Ausführungsformen eines Hebelelementes.

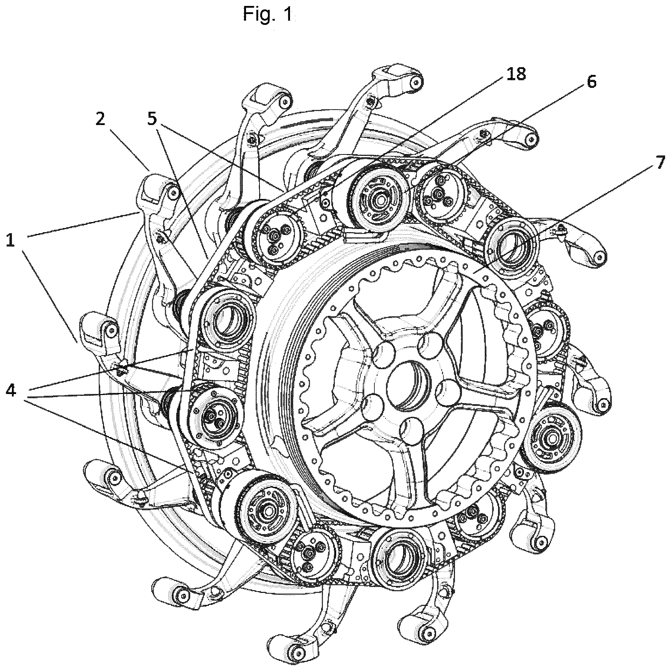

Ein erfindungsgemäßer Wandler wird in Figur 1 gezeigt, der Hebelelemente 1 einschließlich Kontaktelementen 2, hier Rollen, sowie ein mechanisches Kopplungselementsystem 4, umfasst. Der Wandler ist auf einer Felge 7 montiert. Durch die Verformung des Reifens (nicht gezeigt) durch den Kontakt mit der Fahrbahn werden die Hebelelemente 1, die an der Reifeninnenseite des Reifens im Bereich des Kontakt mit der Fahrbahn über das Kontaktelement anliegen, teilweise um die Drehachse des Hebelelementes an ihrem ersten Ende, und damit um die Welle des Hebelelementes, gedreht. Die Hebelelemente 1 vollführen im Betrieb somit eine "Wippbewegung". Die Rückstellkraft in den "gestreckten" Zustand, nach der Passage des durch das Walken des Reifens verformten Teils des Reifens, ergibt sich durch die Fliehkraft aufgrund der Rotation des Rades. Die Hebelelemente 1 sind über eine Freilaufkupplung auf deren Welle befestigt, wodurch die Welle sich nur in eine Richtung dreht, und zwar wenn das Hebelelement hin zur Rotationsachse des Rades gedrückt wird. Durch diese Drehung der Welle wird auch die Antriebsrolle 18 gedreht. Die auftretende Kraft wird von der Antriebsrolle 18 über das Kopplungselementsystem 4, insbesondere über die jeweiligen Zahnriemen 5, zu den benachbarten Rollen übertragen. Jede Antriebsrolle 18, und auch die jeweils benachbarten Rollen, tragen bevorzugt jeweils zwei Zahnriemen, damit wird ein "Ringschluss" hergestellt, d.h. radumläufig sind alle Wellen der Hebelelemente durch das mechanische Kopplungselementsystem 4 mit den jeweils benachbarten Wellen der Hebelelemente über jeweils ein Kopplungselement 5 kraftschlüssig verbunden. Drei Generatoren 6 sind an entsprechend in die Antriebsrollen 18 integrierte Planetengetriebe (nicht sichtbar) befestigt. Die Hebelelemente 1 sowie die Generatoren 6 sind rotationssymmetrisch um Rotationsachse des Rades angeordnet, um eine Unwucht des Rades zu vermeiden. Durch die Bewegung eines Hebelelementes 1 werden alle Antriebsrollen 18 gedreht, und somit auch alle Generatoren 6 angetrieben.

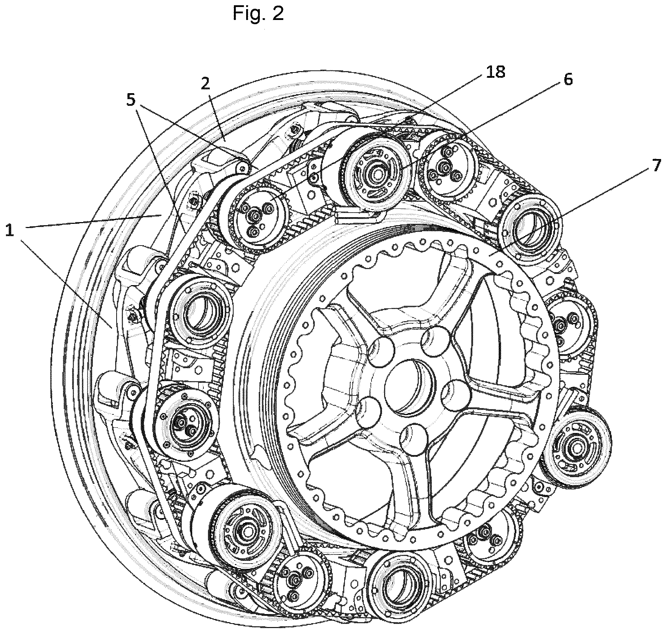

Figur 2 zeigt einen erfindungsgemäßen Wandler entsprechend Figur 1, jedoch sind die Hebelelemente 1 in eingefahrenem Zustand, beispielsweise durch zu geringen Einfluss der Fliehkraft im Stillstand oder bei nur geringer Rotationsgeschwindigkeit des Rades, das heißt an die Felge 7 geklappt, gezeigt. Bei geringem Einfluss der Fliehkraft im Stillstand oder bei nur geringer Rotationsgeschwindigkeit des Rades bewirkt ein Rückstellelement (nicht gezeigt), beispielsweise eine Rückstellfeder, das Einklappen, um beispielsweise einen Reifenwechsel auf der Felge zu ermöglichen, oder eine Beschädigung bei Befahren unebenen Geländes, etwa eines Bordsteines, zu vermeiden.

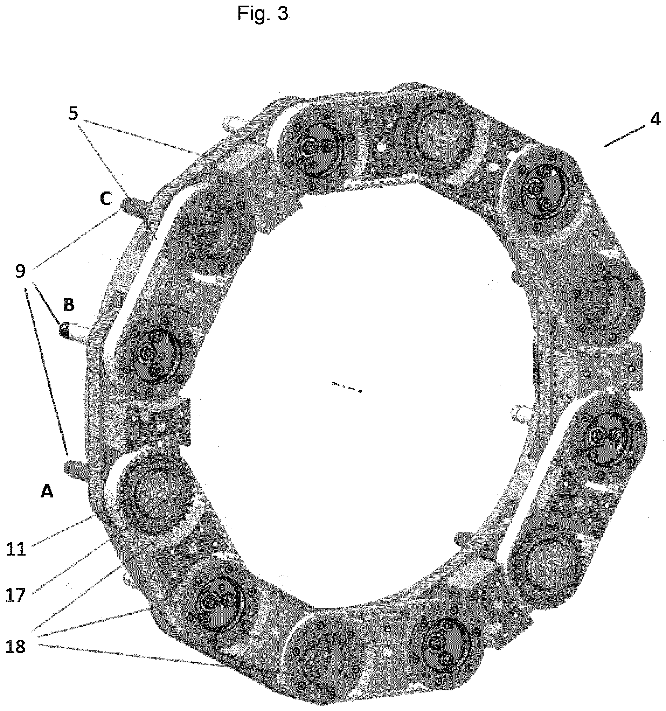

Figur 3 zeigt ein mechanisches Kopplungselementsystem 4, umfassend die Antriebsrollen 18, die sich auf den Wellen 9 der Hebelelemente befinden, sowie entsprechende Kopplungselemente 5, hier als Zahnriemen ausgeführt. Die Wellen 9 und die entsprechenden Antriebsrollen 18 kommen in drei Ausführungen A, B und C vor. In der Ausführung der Welle A ist im Inneren der Antriebsrolle 18 ein Planetengetriebe 11 vorgesehen. Über die Generatorwelle 17, die auch die Achse des Sonnenrades des Planetengetriebes bildet, wird eine Generator (nicht gezeigt) angetrieben. Die Ausführung der Welle C entspricht der der Welle A, jedoch ohne Planetengetriebe 11, da typischerweise nicht an jeder, z.B. nur an jeder vierten, Antriebsrolle 18 ein Generator vorgesehen ist. Typischerweise ist jede zweite Antriebsrolle 18, wie in der Ausführung der Welle B angedeutet, statt mit einem Planetengetriebe mit Mittel zur Befestigung und eventuell auch zum Spannen der Kopplungselemente 5, hier Zahnriemen, beim Auflegen letzterer ausgestattet.

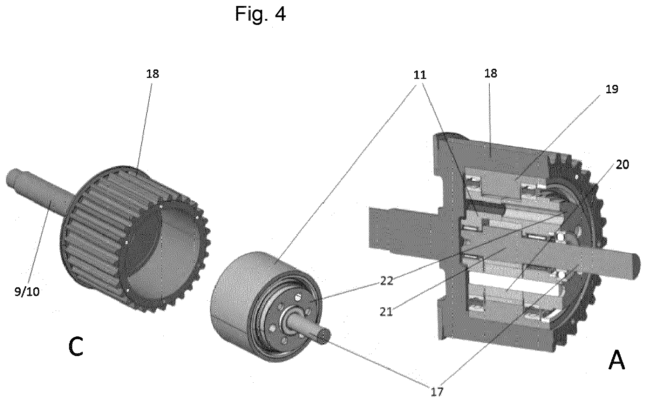

Figur 4 zeigt Details der Antriebsrolle 18, die sich auf den Wellen 9 der Hebelelemente befinden, in den Ausführungen A und C, entsprechend Figur 3. In einer alternativen Ausführungsform des erfindungsgemäßen Wandlers können die Wellen auch Zwischenwellen 10 darstellen, die kein Hebelelement tragen. In der Ausführung der Welle A ist im Inneren der Antriebsrolle 18 ein Planetengetriebe 11 vorgesehen. Über die Generatorwelle 17, die auch die Achse des Sonnenrades des Planetengetriebes bildet, wird eine Generator (nicht gezeigt) angetrieben. Im Inneren der Rolle 18 ist das Hohlrad 19 des Planetengetriebes fest mit der Rolle 18 verbunden, gegebenenfalls bildet die Rolle 18 auch selbst das Hohlrad 19 des Planetengetriebes. Die Achsen der Umlaufräder 20 sind fest am Steg 22 angeordnet. Die Welle des Sonnenrads 21 des Planetengetriebes ist (einstückig) als Generatorantriebswelle 17 ausgebildet. Die Ausführung der Welle C entspricht der der Welle A, jedoch ohne Planetengetriebe 11, da typischerweise nur an jeder vierten Antriebsrolle 18 ein Generator vorgesehen ist.

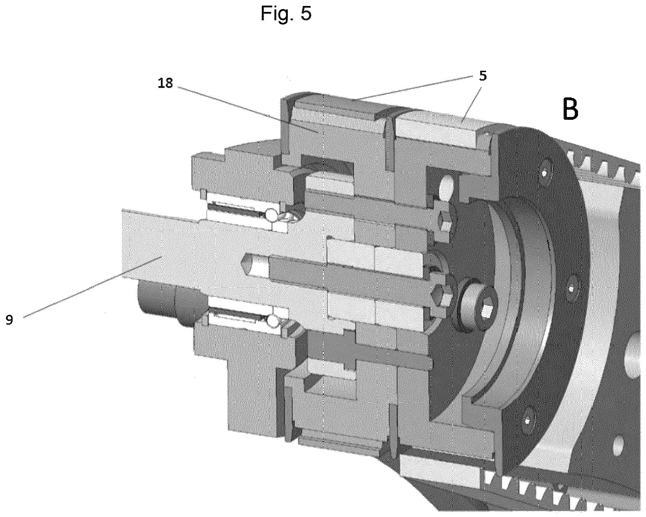

Figur 5 zeigt Details der Antriebsrolle 18, die sich auf der Welle 9 eines Hebelelements befindet, in der Ausführung B, wie auch in Figur 3 ausgeführt. Statt des Planetengetriebes ist die Rolle 18 mit Mitteln zur Befestigung und eventuell auch zum Spannen der Kopplungselemente 5, hier Zahnriemen, beim Auflegen letzterer ausgestattet. Hierzu ist die Rolle vorzugsweise zweigeteilt ausgeführt. Der erste Teil der Rolle 18 trägt ein Kopplungselement 5, hier als Zahnriemen ausgeführt. An den ersten Teil der Rolle, und evtl. auch an der Welle 9 , ist der zweite Teil separat befestigt, so dass er vorzugsweise nach dem Auflegen des Kopplungselements 5 auf den ersten Teil der Rolle 18, angebracht werden kann. Der zweite Teil der Rolle 18 trägt ebenfalls ein Kopplungselement 5, hier als Zahnriemen ausgeführt. Vorzugsweise ist die Anordnung der Rollen 18 in dem Wandler radumläufig als Ausführungen A und C abwechselnd, mit jeweils einer Ausführung B dazwischen. Damit ist jede zweite Rolle in der Ausführung B, die mit Mitteln zur Befestigung und eventuell auch zum Spannen der Kopplungselemente 5, hier Zahnriemen, beim Auflegen letzterer ausgestattet ist. Dies ermöglicht ein leicht handhabbares Auflegen der Zahnriemen mit geeigneter Spannung auf die Antriebsrollen 18 des erfindungsgemäßen Wandlers.

Figur 6 zeigt einen erfindungsgemäßer Wandler wird in Figur 2 gezeigt in Seitenansicht, der Hebelelemente 1 einschließlich Kontaktelementen 2, hier Rollen, sowie ein mechanisches Kopplungselementsystem 4, umfasst. Die Hebelelemente sind in eingefahrenem Zustand, beispielsweise durch zu geringen Einfluss der Fliehkraft im Stillstand oder bei nur geringer Rotationsgeschwindigkeit des Rades, das heißt an die Felge 7 geklappt, gezeigt. Gezeigt ist auch das mechanisches Kopplungselementsystem 4 umfassend die Antriebsrollen 18 sowie entsprechende Kopplungselemente 5, hier als Zahnriemen ausgeführt. Die Hebelelemente 1 sowie die Generatoren 6 sind rotationssymmetrisch um die Felge 7 angeordnet, um eine Unwucht des Rades zu vermeiden. Der Winkel α, den zwei Wellen zweier benachbarter Hebelelemente 1 bezüglich der Rotationsachse des Rades aufspannen, beträgt jeweils 360°/Anzahl der Hebelelemente, hier 360°/12 = 30°.

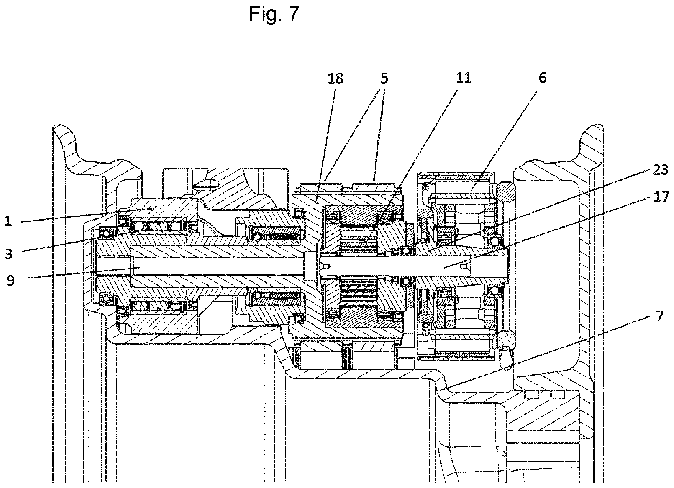

Figur 7 zeigt den Schnitt A-A, wie in Figur 6 angedeutet, durch die Felge 7 und den erfindungsgemäßen Wandler. Das Hebelelement 1 ist über die Freilaufkupplung 3 auf der Welle 9 befestigt. Diese überträgt die aus der Wippbewegung des Hebelelementes erzeugte Rotation auf die Antriebsrolle 18 sowie entsprechende Kopplungselemente 5, hier als Zahnriemen ausgeführt. Die Rotation wird über das Planetengetriebe 11 ins Schnelle zur Generatorantriebswelle 17 auf den Rotor 23 des Generators 6 übersetzt.

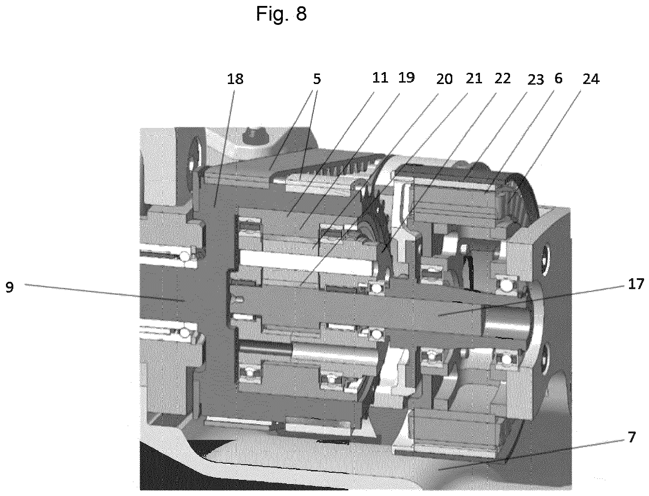

Figur 8 zeigt einen Ausschnitt des Schnitts A-A, wie in Figur 6 angedeutet, durch die Felge 7 und den erfindungsgemäßen Wandler in perspektivischer Ansicht. Die Welle 9 überträgt die aus der Wippbewegung des Hebelelementes erzeugte Rotation auf die Antriebsrolle 18 sowie entsprechende Kopplungselemente 5, hier als Zahnriemen ausgeführt. Die Rotation wird über das Planetengetriebe 11 ins Schnelle zur Generatorantriebswelle 17 des Generators 6 übersetzt. Im Inneren der Antriebsrolle 18 ist hierzu ein Planetengetriebe 11 vorgesehen. Im Inneren der Rolle 18 ist das Hohlrad 19 des Planetengetriebes fest mit der Rolle 18 verbunden, gegebenenfalls bildet die Rolle 18 selbst das Hohlrad 19 des Planetengetriebes. Die Achsen der Umlaufräder 20 sind fest am Steg 22 angeordnet. Die Welle des Sonnenrads 21 des Planetengetriebes ist (einstückig) als Generatorantriebswelle 17 ausgebildet. Letztere trägt den Rotor 23 des Generators. Der Stator 24 des Generators ist mit der Felge 7 verbunden.

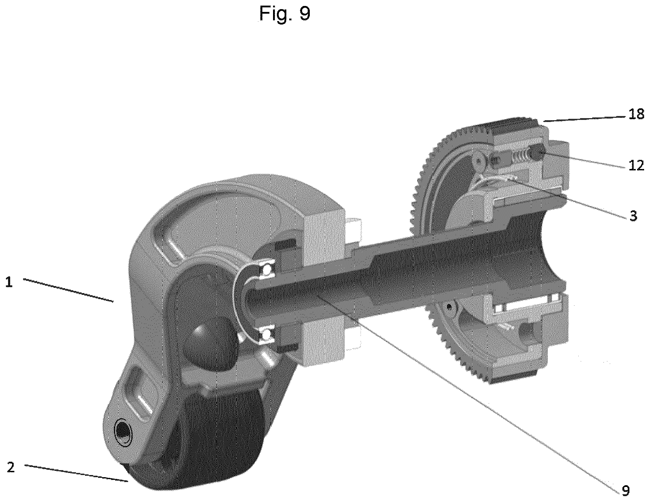

Figur 9 zeigt eine Detailansicht einer Ausführungsform eines Hebelelements 1 mit Kontaktelement 2, hier als Rolle ausgeführt. Über die Welle 9 am ersten Endes des Hebelelementes 1 wird die Kraft auf die Antriebsrolle 18 übertragen. Letztere überträgt die Kraft auf die mechanischen Kopplungselemente (nicht gezeigt). Die Freilaufkupplung 3 überträgt die Bewegung des Hebelelementes nur in eine Drehrichtung, der Überlastschutz 12 gewährleistet die Vermeidung der Übertragung zu hoher Kräfte.

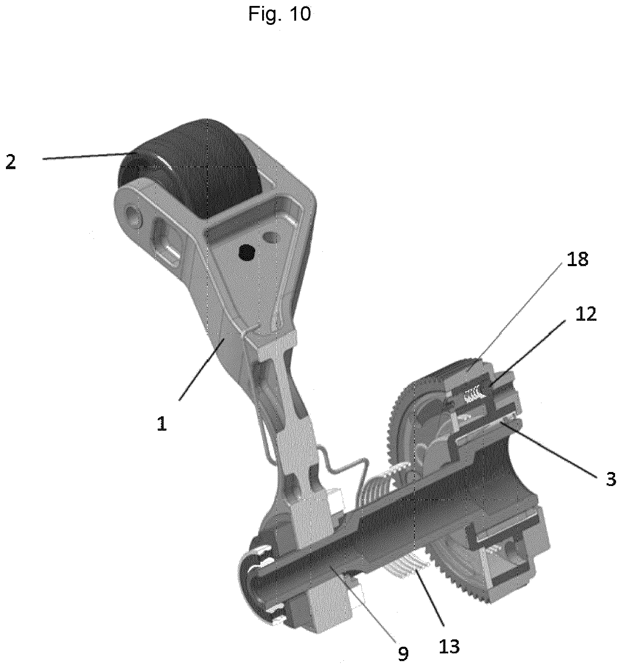

Figur 10 zeigt eine Detailansicht einer Ausführungsform eines Hebelelements 1 mit Kontaktelement 2, hier als Rolle ausgeführt. Über die Welle 9 am ersten Endes des Hebelelementes 1 wird die Kraft auf die Antriebsrolle 18 übertragen. Letztere überträgt die Kraft auf die mechanischen Kopplungselemente (nicht gezeigt). Die Freilaufkupplung 3 überträgt die Bewegung des Hebelelementes nur in eine Drehrichtung, der Überlastschutz 12 gewährleistet die Vermeidung der Übertragung zu hoher Kräfte. Eine Feder dient als Vorspannelement 13.

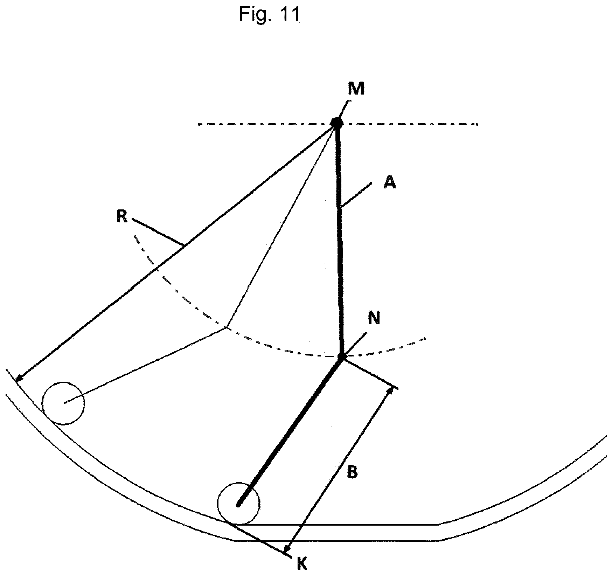

Figur 11 illustriert die Länge A als Distanz der Drehachse des Hebelelementes N von der Radmitte M und die Länge B als den Abstand der Drehachse des Hebelelementes N von der der Kontaktstelle K. Letztere ist die größte Distanz des Kontaktelements von der Drehachse des Hebelelementes N, die in Kontakt mit der Innenseite des Radreifens tritt bzw. treten kann.

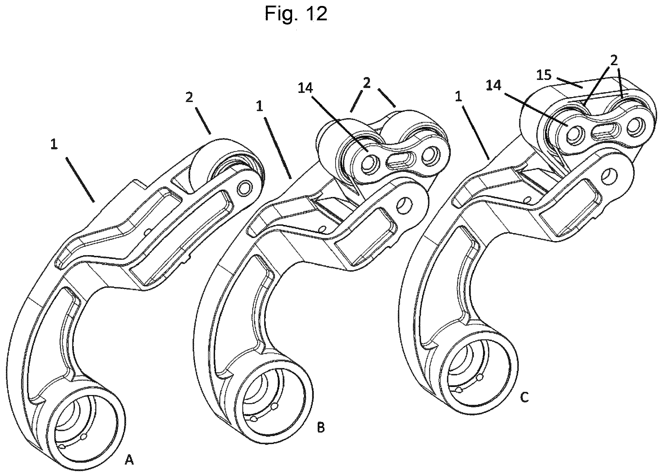

Figur 12 zeigt Detailansichten dreier Ausführungsformen von Hebelelementen 1 mit Kontaktelement(en) 2, hier als Rolle ausgeführt. In der Ausführungsform A trägt das Hebelelement 1 eine Rolle als Kontaktelement 2. In der Ausführungsform B trägt das Hebelelement 1 einen Schlitten 14 (zweiter Teil), der zwei Rollen als Kontaktelemente 2 trägt. In der Ausführungsform C trägt das Hebelelement 1 ebenfalls einen Schlitten 14 (zweiter Teil), der zwei Rollen als Kontaktelemente 2 trägt. Die zwei Rollen als Kontaktelemente 2 werden in der Ausführungsform C von einem Riemen 15 umspannt, der noch über eine weitere am Schlitten gelagerte Rolle (nicht gezeigt) geführt wird.

### Referenzzeichenliste:

- 1: Hebelelement
- 2: Kontaktelement
- 3: Freilaufkupplung
- 4: mechanisches Kopplungselementsystem
- 5: Kopplungselement
- 6: Generator
- 7: Felge
- 8: Reifen
- 9: Welle Hebelelement
- 10: Zwischenwelle
- 11: Planetengetriebe
- 12: Überlastschutz
- 13: Vorspannelement
- 14: Schlitten
- 15: Riemen an Kontaktelementen
- 16: Umlenkrolle
- 17: Generatorantriebswelle
- 18: Antriebsrolle
- 19: Planetengetriebe Hohlrad
- 20: Planetengetriebe Umlaufradrad
- 21: Planetengetriebe Sonnenrad
- 22: Planetengetriebe Steg
- 23: Rotor des Generators
- 24: Stator des Generators

## Patentansprüche

1. Wandler zur Gewinnung von elektrischer Energie in einem rollenden Rad eines Fahrzeugs aus der Verformung des Radreifens durch Kontakt mit der Fahrbahn, umfassend
a) mindestens vier Hebelelemente (1), die jeweils an ihrem ersten Ende drehbar gelagert sind, und an ihrem zweiten Ende konfiguriert sind, mit der Innenseite eines Radreifens über mindestens ein Kontaktelement (2) derart in Kontakt zu treten, dass eine Verformung des Radreifens durch Kontakt mit der Fahrbahn eine Drehbewegung der Hebelelemente bewirkt,
b) ein mechanisches Kopplungselementsystem (4), das geeignet ist, die durch die Drehbewegung der Hebelelemente (1) auftretende Kraft zu übertragen, und
c) mindestens einen elektrischen Generator (6), der konfiguriert ist, die durch das mechanische Kopplungselementsystem (4) übertragene Kraft in elektrische Energie umzuwandeln,
**dadurch gekennzeichnet, dass**
die Hebelelemente (1) jeweils an ihrem ersten Ende mittels einer Welle (9) drehbar gelagert sind, und die Welle (9) konfiguriert ist, die Kraft der Drehbewegung zu übertragen,
das mechanische Kopplungselementsystem (4) pro Welle (9) jedes Hebelelementes (1) mindestens zwei Kopplungselemente (5) aufweist, die jeweils angeordnet sind, die Kraft der Drehbewegung auf die Welle (9) des benachbart liegenden Hebelelements (1) oder auf eine Zwischenwelle (10) zu übertragen, und
mindestes ein Planetengetriebe (11) vorhanden ist, das angeordnet ist, die Drehbewegung einer Welle (9) eines Hebelelementes oder einer Zwischenwelle (10) auf einen elektrischen Generator (6) zu übertragen.

2. Wandler gemäß Anspruch 1, **dadurch gekennzeichnet, dass** der elektrischen Generator (6) konfiguriert ist, die durch das Planetengetriebe übertragene Kraft in elektrische Energie umzuwandeln.

3. Wandler gemäß Anspruch 1, **dadurch gekennzeichnet, dass** das Planetengetriebe so angeordnet ist, dass es die Drehbewegung der Welle (9) ins Schnelle, vorzugsweise mit einer Übersetzung von etwa 1:4 bis 1:10, zum Generator übersetzt.

4. Wandler gemäß einem der vorhergehenden Ansprüche, **dadurch gekennzeichnet, dass** das in dem Kopplungselementsystem (4) die Kopplungselemente (5) so angeordnet sind, dass die Kopplungselemente (5) einen Kraftschluss der Wellen (9) aller Hebelelemente (1), gegebenenfalls über Zwischenwellen (10), bewirken.

5. Wandler gemäß einem der vorhergehenden Ansprüche, **dadurch gekennzeichnet, dass** die Kopplungselemente (5) jeweils paarweise rotationssymmetrisch um die Rotationsachse des Rades angeordnet sind.

6. Wandler gemäß einem der vorhergehenden Ansprüche, **dadurch gekennzeichnet, dass** das Kopplungselement (5) eine Kette oder einen Riemen, insbesondere einen Zahnriemen, umfasst.

7. Wandler gemäß einem der vorhergehenden Ansprüche, **dadurch gekennzeichnet, dass** die Hebelelemente (1) rotationssymmetrisch um die Rotationsachse des Rades angeordnet sind.

8. Wandler gemäß einem der vorhergehenden Ansprüche, **dadurch gekennzeichnet, dass** der Wandler mindestens zwei rotationssymmetrisch um die Rotationsachse des Rades angeordnete elektrischen Generatoren (6) aufweist.

9. Wandler gemäß einem der vorhergehenden Ansprüche, **dadurch gekennzeichnet, dass** das bzw. die Hebelelement(e) (1) die Kraft über eine Freilaufkupplung (3) auf die Welle (9) übertragen.

10. Wandler gemäß einem der vorhergehenden Ansprüche, **dadurch gekennzeichnet, dass** die Summe (A+B) des Abstands A der Drehachse N der Hebelelemente (1) von der Radmitte M und des Abstands B der Drehachse N von der Kontaktstelle K des Kontaktelementes mit der Innenseite des Radreifens, im Falle von mehreren Kontaktelementen pro Hebelelement die Kontaktstelle mit dem größten Abstand von der Drehachse N, im Verhältnis zum Radus der Innenseite des Radreifens R ((A+B)/R)) im Bereich von 102% bis 110% liegt.

11. Wandler gemäß einem der vorhergehenden Ansprüche, **dadurch gekennzeichnet, dass** an dem zweiten Ende des Hebelelements (1) das Kontaktelement (2) derart an dem Hebelelement um eine Rotationsachse drehbar gelagert ist, dass das Kontaktelement (2) den Kontakt des Hebelelements mit dem Radreifen vermittelt, und die Rotationsachse des Kontaktelements (2) im Wesentlichen parallel zur Rotationsachse des Rades verläuft, und das Kontaktelement (2) ein bezüglich Rotation um seine Drehachse im Wesentlichen rotationssymmetrische Form aufweist, und insbesondere eine Rolle darstellt.

12. Wandler gemäß einem der vorhergehenden Ansprüche, **dadurch gekennzeichnet, dass** das Kontaktelement (2) bezüglich Rotation um seine Drehachse frei drehbar ist.

13. Wandler gemäß einem der vorhergehenden Ansprüche, **dadurch gekennzeichnet, dass** der Wandler weiterhin ein Vorspannmittel für die Hebelelemente (1) aufweist, das die Drehung der Hebelelemente (1) um ihr erstes Ende mit einer Kraft in die durch die Verformung des Radreifens durch Kontakt mit der Fahrbahn verursachte Drehbewegung der Hebelelemente vorspannt.

14. System zur Gewinnung von elektrischer Energie in einem rollenden Rad eines Fahrzeugs aus der Verformung des Radreifens durch Kontakt mit der Fahrbahn, umfassend einen Wandler gemäß einem der vorhergehenden Ansprüche sowie eine Radfelge als Trägerstruktur.

15. Fahrzeug oder Rad umfassend ein System nach Anspruch 14.
